Europäisches Patentamt

European Patent Office

Office européen des brevets

(19)

(11) **EP 0 773 526 B1**

(12)

# FASCICULE DE BREVET EUROPEEN

(45) Date de publication et mention
de la délivrance du brevet:
**26.10.2005 Bulletin 2005/43**

(51) Int Cl.⁷: **G09B 9/04**

(21) Numéro de dépôt: **96402381.6**

(22) Date de dépôt: **08.11.1996**

(54) **Dispositif de restitution d'effort au volant d'un véhicule automobile à direction découplée**

Vorrichtung zum Erzeugen einer Lenkkraftreaktion am Lenkrad eines Karftfahrzeuges mit entkoppelter Steuerung

Steering reaction force generating device for a vehicle with uncoupled steering

(84) Etats contractants désignés:
**BE ES GB IT SE**

(30) Priorité: **10.11.1995 FR 9513353**

(43) Date de publication de la demande:
**14.05.1997 Bulletin 1997/20**

(73) Titulaire: **Renault s.a.s.**
**92100 Boulogne Billancourt (FR)**

(72) Inventeurs:
 • **Butot, Jean-Luc**
  **78600 Mesnil-le-Roi (FR)**
 • **Chevennement, Jean**
  **92500 Rueil Malmaison (FR)**
 • **Saint-Martin, Philippe**
  **78800 Houilles (FR)**

(74) Mandataire: **Davies, Owen Robert Treharne**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
 EP-A- 0 522 924          EP-A- 0 680 132
 GB-A- 2 286 568

## Description

L'invention concerne un dispositif de restitution d'effort au volant d'un véhicule automobile à direction découplée, c'est-à-dire sans liaison entre le volant et les roues reposant sur le sol, que le véhicule soit réel ou appartenant à un système de simulation.

En effet, l'invention s'applique principalement aux simulateurs de conduite interactifs tels que les simulateurs d'études, les simulateurs d'apprentissage utilisés dans les auto-écoles ou les simulateurs ludiques. Dans le domaine de l'industrie automobile, l'invention s'applique également aux véhicules laboratoires n'ayant plus de liaison mécanique entre le volant et les roues.

Dans tous ces systèmes de simulation, notamment de simulation de conduite interactive utilisés par les constructeurs automobiles comme moyen d'essai évitant certains essais sur véhicules réels, il s'agit d'obtenir une reproductibilité totale des essais par la maîtrise de l'environnement, en recréant par exemple des conditions météorologiques, de trafic routier, de conduite de jour ou de nuit, et de permettre une instrumentation aisée pour l'enregistrement de paramètres du véhicule ou d'observation du conducteur.

L'objectif de tels simulateurs de conduite est de recréer un contexte quasi réel de conduite automobile, en reproduisant les différentes sensations que percevrait un conducteur dans un véhicule roulant, en particulier à partir d'un habitacle de véhicule réel placé devant un écran, mais immobile et dont le volant est découplé des roues.

Le problème à résoudre consiste à restituer les efforts au niveau du volant du simulateur de conduite interactif, grâce à un mécanisme qui génère un couple résistant sur le volant en fonction à la fois du type de véhicule à simuler, qu'il soit équipé d'une direction manuelle ou assistée, et en fonction aussi de la dynamique à recréer, c'est-à-dire qu'il soit à l'arrêt ou en roulage. Ce couple résistant doit avoir une amplitude et une nature très différentes'selon que le véhicule est simulé, à l'arrêt ou en roulage. En effet, dans un véhicule réel à l'arrêt, le couple résistant qui s'applique au volant, est principalement un couple de frottements secs, ne dépendant pas ou peu de la position du volant, mais dont l'amplitude dépend des caractéristiques du véhicule - sa masse, son type de pneumatiques ... - et pouvant atteindre 20Nm pour un véhicule lourd équipé d'une direction manuelle. En roulage, le couple résistant a une composante proportionnelle à l'accélération transversale du véhicule, donc dépendante de l'angle du volant et de la vitesse du véhicule, correspondant à un couple de rappel, et une composante qui décroît rapidement en fonction de la vitesse du véhicule, correspondant à un couple de frottement.

Actuellement, il existe plusieurs catégories de systèmes restituteurs d'effort au volant. Une première catégorie de systèmes, notamment décrite dans la demande de brevet européen 0 379 393, au nom d'ATARI GAMES CORPORATION, simule un véhicule en roulage et comprend un moteur électrique utilisé pour générer le couple de rappel et un système mécanique non pilotable pour créer le couple de frottement. L'inconvénient de ce système est que le couple de frottement est constant quelle que soit la vitesse du véhicule. Selon une deuxième catégorie de systèmes pilotés par la vitesse du volant, ceux-ci sont constitués par un actionneur hydraulique, demandant une infrastructure particulière et importante, présentant des risques de fuites de liquide responsables de salissures, et d'un coût élevé. Un autre type de systèmes de restitution d'effort, notamment décrits dans la demande de brevet européen 0 522 924, au nom de SEXTANT AVIONIQUE, utilisent uniquement un moteur électrique pilotable pour générer le couple résistant au volant destiné à restituer les couples de frottement et de rappel. Ces systèmes sont relativement complexes car ils nécessitent tout d'abord de placer un capteur de couple, par exemple une jauge de contrainte sur la colonne de direction, entre le moteur électrique et le volant afin de mesurer l'effort appliqué par le conducteur en tournant le volant pour un fonctionnement en boucle fermée. Ce dispositif sophistiqué est d'un coût élevé, présente des difficultés de mise au point et une dérive dans le temps. De tels systèmes obligent de plus à générer une consigne de couple résistant à une fréquence élevée, supérieure à 1 kHz, pour obtenir une restitution correcte d'effort dans le cas de simulation d'un véhicule à l'arrêt. En effet, dans ce cas de fonctionnement, la dynamique du couple est la plus importante et le moteur électrique est instable, ce qui oblige à utiliser une fréquence d'échantillonnage de l'ordre du temps de réponse électrique du moteur pour éviter les instabilités. Pour cela, ces systèmes de restitution d'effort comprennent soit un moteur électrique monté directement en bout de colonne de direction, soit un motoréducteur pour générer les niveaux de couple maximum demandés, et ont par conséquent pour inconvénient d'être bruyants , volumineux et chers.

Le document GB 2 286 568 concerne un dispositif de restitution d'effort au volant pour des simulateurs de jeux et d'entraînement. Le système connu comprend un calculateur électronique de commande et de contrôle, un capteur d'angle du volant, un moteur électrique appliquant à la colonne de direction un couple de rappel proportionnel à l'accélération transversale du véhicule via l'entrée d'un coupleur à poudre magnétique, qui applique un couple de frottement à la colonne de direction par l'intermédiaire d'un système de courroies.

L' invention a pour but de pallier ces différents inconvénients en proposant un dispositif de restitution d' effort au volant permettant le pilotage du frottement en temps réel.

Pour cela, l'invention propose un dispositif de restitution d'effort au volant d'un véhicule automobile à direction découplée, comprenant un calculateur électronique de commande et.de contrôle, comprenant de plus :

- un capteur d'angle du volant couplé à la colonne de direction du véhicule et connecté au calculateur,
- des moyens électroniques de conversion des tensions de consignes délivrées par le calculateur de commande, en consignes de courant ,
- un moteur électrique dont l'axe de sortie du rotor central est directement solidaire de la colonne de direction, piloté par une consigne de courant envoyée par les moyens de conversion et appliquant à la colonne de direction un couple de rappel proportionnel à l'accélération transversale du véhicule,
- un coupleur à poudre dont le cylindre intérieur est directement solidaire de la colonne de direction, piloté par une consigne de courant envoyée par les moyens de conversion et applicant à la colonne de direction un couple de frottement.

D'autres caractéristiques et avantages de l'invention apparaîtront à la lecture de la description qui suit, illustrée par les figures jointes qui sont :

- la figure 1 : un schéma d'architecture d'un dispositif de restitution d'effort selon l'invention ;
- les figures $2_a$ et $2_b$ : les courbes représentatives de la consigne de couple de rappel en fonction de l'accélération transversale du véhicule, respectivement dans le cas d'une direction manuelle et d'une direction assistée ;
- la figure 3 : la courbe représentative d'une composante de la consigne de couple de frottement en fonction de la vitesse du véhicule ;
- la figure 4 : la courbe représentative d'une composante de la consigne de couple de frottement en fonction de la vitesse du volant.

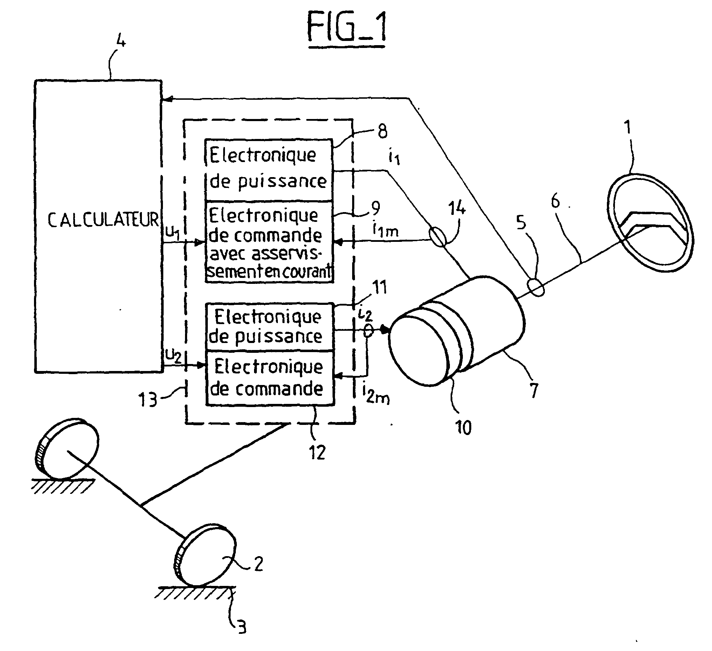

La figure 1 montre l'architecture d'un dispositif de restitution d'effort selon l'invention, au volant 1 d'un véhicule automobile d'un simulateur de conduite, dont la liaison entre le volant et les roues 2 reposant sur le sol 3 est coupée, pour être utilisé par exemple dans un simulateur de conduite interactif équipé d'un calculateur électronique 4 de commande et de contrôle.

Le dispositif selon l'invention est composé d'un capteur 5 d'angle du volant, couplé à la colonne 6 de direction du véhicule et destiné à délivrer au calculateur 4 une information de position angulaire du volant par rapport à une position de référence. Au-delà du capteur d'angle 5, par rapport au volant 1, est déposé un moteur électrique 7 dont l'axe de sortie du rotor central est solidaire de la colonne de direction.

Ce moteur électrique 7 est piloté par le calculateur électronique 4, par l'intermédiaire de moyens électroniques 13 de conversion de la tension de consigne, délivrée par une sortie analogique du calculateur 4, en courant de consigne alimentant le moteur 7. Le calculateur a pour fonction de calculer la consigne de couple que le moteur doit appliquer à la colonne de direction. Les moyens de conversion 13 comprennent un circuit électronique 8 de puissance associé à un circuit électronique 9 de commande avec asservissement en courant. Ainsi, le calculateur de commande 4 délivre une tension de commande $u_1$ au circuit électronique 9 de commande, qui lui-même envoie un courant il au moteur par l'intermédiaire du circuit électronique de puissance 8. Le courant $i_{1m}$ circulant dans le moteur est mesuré par le capteur 14 et ensuite renvoyé vers les moyens de conversion 13 pour être contrôlé par le calculateur électronique 4 de commande et de contrôle et régulé par le circuit électronique de commande 9. La boucle d'asservissement en courant est nécessaire pour garantir un couple de rappel fourni par le moteur qui soit égal au couple de consigne calculé par le calculateur, quelle que soit la vitesse de rotation du moteur. Le rôle de ce moteur électrique 7 est de générer la composante du couple résistant correspondant au couple de rappel proportionnel à l'accélération transversale du véhicule, ce couple de rappel étant calculé par le calculateur de commande 4 en fonction de paramètres du véhicule tels que l'accélération transversale, l'angle du volant, la dérive, et en fonction des caractéristiques du véhicule comme sa masse, le type de pneumatiques, les raideurs de trains, la direction manuelle ou assistée et son rapport de démultiplication.

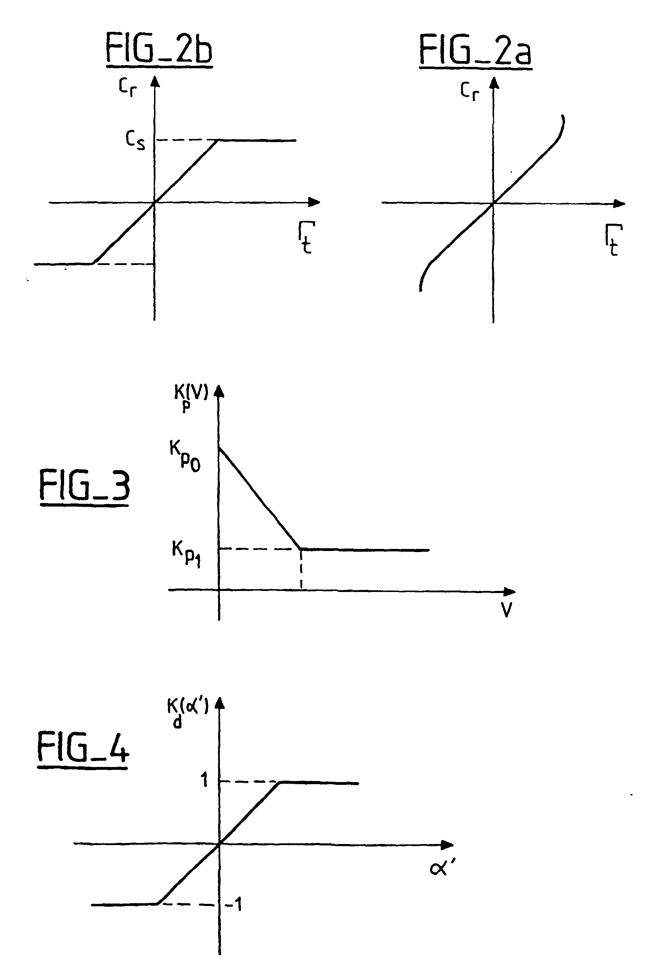

La figure 2a est la représentation graphique des variations du couple de rappel $C_r$ en fonction de l'accélération transversale $\Gamma_t$ correspondant à une direction manuelle. La figure $2_b$ est la représentation graphique des variations du couple de rappel $C_r$ en fonction de l'accélération transversale $\Gamma_t$, correspondant à une direction assistée présentant un maximum de saturation $C_s$.

Pour générer le couple de frottement s'opposant à la rotation du volant, le dispositif selon l'invention comprend également ( figure 1 ) un coupleur à poudre 10, piloté en courant par le calculateur de commande 4, par l'intermédiaire des moyens de conversion 13 d'une deuxième tension de consigne $u_2$ délivrée par une deuxième sortie analogique du calculateur 4. Ces moyens de conversion comprennent à cet effet un circuit électronique 11 de puissance, qui alimente le coupleur à poudre 10 par un courant $i_2$ qui est fonction de la consigne en tension $u_2$, délivrée par le calculateur de commande 4 et reçue par un circuit électronique de commande 12. Le courant $i_{2m}$ circulant dans le coupleur à poudre est renvoyé dans le circuit électronique 12 pour être contrôlé. Le calculateur de commande 4 fournit au coupleur à poudre 10 une tension $u_2$ de consigne qui est proportionnelle au couple de frottement $C_f$ que doit générer le coupleur à poudre sur la colonne de direction 6. Ce couple de frottement $C_f$ s'exprime sous la forme d'un produit, d'une part d'une composante $K_p(V)$ qui est une fonction de la vitesse $V$ du véhicule, et d'autre part d'une composante $K_d(\alpha')$ qui est une fonction de la vitesse $\alpha'$ du volant :

$$C_f = K_p(V) * K_d(\alpha').$$

La figure 3 représente graphiquement la composante $K_p(V)$ du couple de frottement qui est maximale quand le véhicule est à l'arrêt, prenant alors une valeur $K_{p0}$ appelée couple de parking, et qui décroît vers une valeur de seuil minimum $K_{p1}$ traduisant l'hystérésis de roulage et les frottements inévitables des trains et de la colonne de direction, quelle que soit ensuite la vitesse V du véhicule.

La figure 4 représente la composante $K_d(\alpha')$ du couple de frottement, qui est une fonction linéaire de la vitesse de braquage $\alpha'$ du volant. Comme pour la consigne de couple de rappel appliquée au moteur électrique 7, la consigne de couple de frottement est calculée par le calculateur de commande 4 en fonction de paramètres et de caractéristiques déterminés du véhicule.

Le coupleur à poudre 10 est constitué de deux cylindres concentriques entre lesquels est enfermée une poudre magnétique dont les caractéristiques varient en fonction du champ magnétique qui la traverse, faisant ainsi varier le coefficient de frottement entre les deux cylindres. Le cylindre intérieur est solidaire de la colonne de direction, alors que le cylindre extérieur est fixe, la poudre entre les deux devant s'opposer à la rotation de la colonne de direction. Le coupleur à poudre permet de générer des couples de frottements secs importants tout en étant de faibles dimensions. Le fait d'utiliser un moteur électrique associé à un coupleur à poudre, pilotés tous les deux par un calculateur électronique de commande, permet de réaliser un dispositif de restitution d'effort au volant relativement simple. Contrairement à l'art antérieur, on n'a plus besoin d'un capteur de couple lorsque l'on s'est assuré que l'inertie du dispositif, soit l'inertie du rotor du moteur ajoutée à l'inertie du frein, est faible par rapport à l'inertie du volant.

Les consignes de tensions délivrées par le calculateur de commande sont générées à des fréquences beaucoup plus basses, de l'ordre de 100 Hz, ce qui diminue la charge de travail du calculateur, réduisant ainsi sa complexité et son coût. De plus, le couple maximum que doit fournir le moteur électrique est nettement plus faible, car il correspond seulement au couple maximum de rappel, le couple de frottement étant lui fourni par le coupleur à poudre et dont le maximum peut être beaucoup plus élevé. Cela réalise un gain de volume, de poids et de coût.

Ce dispositif a pour autre avantage d'être commandable en temps réel, le coefficient de frottement créé par la poudre pouvant varier, et d'être stable numériquement, le coupleur à poudre créant un frottement sec pur. On peut ainsi simuler des efforts de parking avec des frottements importants, pour une direction manuelle, ou des efforts de roulage, avec couple de rappel du volant et minimum de frottements, pour une direction manuelle ou une direction assistée.

A ces avantages précités, liés tout spécialement à l'utilisation d'un coupleur à poudre, on peut ajouter d'autres avantages du dispositif de restitution d'effort selon l'invention, qui sont une grande précision et une grande fiabilité dues aux circuits utilisés et au pilotage par calculateur électronique de commande, une adaptabilité à tout type de véhicule et un faible coût. Enfin, ce dispositif peut être avantageusement utilisé dans un véhicule laboratoire dont les quatre roues sont indépendantes pour restituer les efforts au volant dus à de nouvelles lois de direction assistée.

## Revendications

1. Dispositif de restitution d'effort au volant d'un véhicule automobile à direction découplée, comprenant un calculateur électronique (4) de commande et de contrôle, un capteur d'angle du volant (5), un moteur électrique (7) et un coupleur à poudre (10) comprenant de plus :

   - des moyens électroniques (13) de conversion des tensions de consignes ($u_1$ et $u_2$) délivrées par le calculateur de commande (4), en consignes de courant ($i_1$ et $i_2$),

   et en ce que :

   - le capteur (5) d'angle du volant est couplé à la colonne de direction (6) du véhicule et connecté au calculateur (4),
   - l'axe de sortie du rotor central du moteur électrique (7) est directement solidaire de la colonne de direction (6), le moteur étant piloté par une consigne de courant ($i_1$) envoyée par les moyens de conversion (13) et applicant à la colonne de direction un couple de rappel ($C_r$) proportionnel à l'accélération transversale ($\Gamma_t$) du véhicule,
   - le cylindre intérieur du coupleur à poudre (10), qui est constitué de deux cylindres concentriques entre lesquels est enfermée une poudre magnétique, est directement solidaire de la colonne de direction (6), le coupleur étant piloté par une consigne de courant ($i_2$) envoyée par les moyens de conversion (13) et applicant à la colonne de direction un couple de frottement ($C_f$).

2. Dispositif de restitution d'effort selon la revendication 1, **caractérisé en ce que** le coupleur à poudre (10) applique à la colonne de direction (6) un couple de frottement ($C_f$) s'exprimant sous la forme d'un produit d'une part d'une composante [$K_p(V)$] qui est une fonction de la vitesse (V) du véhicule, et d'autre part d'une composante [$K_d(\alpha')$] qui est une fonction de la vitesse ($\alpha'$) du volant (1):

$$C_f = K_p(V) * K_d(\alpha').$$

3. Dispositif de restitution d'effort selon la revendication 1, **caractérisé en ce que** les moyens de conversion (13) comprennent d'une part un circuit électronique (9) de commande associé à un circuit électronique (8) de puissance pour alimenter le moteur électrique (7) et d'autre part un circuit électronique (12) de commande associé à un circuit électronique (11) de puissance pour alimenter le coupleur à poudre (10).

4. Dispositif de restitution d'effort selon les revendications 1 à 3, **caractérisé en ce qu'**il comprend de plus un capteur (14) permettant l'asservissement du courant ($i_1$) pilotant le moteur électrique (7).

5. Dispositif de restitution d'effort selon les revendications 1 à 4, **caractérisé en ce que** les courants ($i_{1m}$ et $i_{2m}$) circulant respectivement dans le moteur électrique (7) et le coupleur à poudre (10), pilotés par le calculateur électronique (4) de commande et de contrôle, sont renvoyés dans les moyens de conversion (13) pour être contrôlés ensuite par ledit calculateur électronique de commande et de contrôle (4).

**Patentansprüche**

1. Vorrichtung zur Wiedergabe der Lenkkraft am Lenkrad eines Kraftfahrzeuges mit entkoppelter Steuerung mit einem elektronischen Befehls- und Steuerrechner (4), einem Lenkradwinkelsensor (5), einem Elektromotor (7) und einer Pulverkupplung (10), wobei die Vorrichtung weiterhin aufweist:

- elektronische Mittel (13) zur Umwandlung der durch den Befehlsrechner (4) ausgegebenen Soll-Spannungen ($u_1$ und $u_2$) in Soll-Stromstärken ($i_1$ und $i_2$),

**dadurch gekennzeichnet, dass**

- der Lenkradwinkelsensor (5) mit der Lenksäule (6) des Fahrzeuges gekoppelt ist und mit dem Rechner (4) verbunden ist,
- die Ausgangswelle des Zentralrotors des Elektromotors (7) direkt einstückig mit der Lenksäule (6) verbunden ist, wobei der Motor durch einen Soll-Strom ($i_1$) gesteuert wird, der von den Umwandlungsmitteln (13) ausgesandt wird und an die Lenksäule ein Rückführdrehmoment ($C_r$) anliegt, welches proportional zur Querbeschleunigung ($\Gamma_t$) des Fahrzeuges ist,
- der Innenzylinder der Pulverkupplung (10), die aus zwei konzentrischen Zylindern besteht, zwischen denen ein Magnetpulver eingeschlossen ist, direkt einstückig mit der Lenksäule (6) verbunden ist, wobei die Kupplung von einem Soll-Strom ($i_2$) gesteuert wird, der von den Umwandlungsmitteln (13) ausgesandt wird und an die Lenksäule ein Reibungsdrehmoment ($C_f$) anlegt.

2. Vorrichtung zur Wiedergabe der Lenkkraft gemäß Anspruch 1, **dadurch gekennzeichnet, dass** die Pulverkupplung (10) an die Lenksäule (6) ein Reibungsdrehmoment ($C_f$) anlegt, welches sich in der Form eines Produktes zwischen einerseits einer Komponente [Kp (V)], die eine Funktion der Fahrzeuggeschwindigkeit (V) ist, und andererseits einer Komponente [$K_d (\alpha')$], welche eine Funktion der Geschwindigkeit ($\alpha'$) des Lenkrades (1) ist, ausdrückt:

$$C_f = K_p(V) * K_d(\alpha').$$

3. Vorrichtung zur Wiedergabe der Lenkkraft gemäß Anspruch 1, **dadurch gekennzeichnet, dass** die Umwandlungsmittel (13) einerseits einen elektronischen Befehlsschaltkreis (9) umfassen, der einem elektronischen Leistungsschaltkreis (8) zugeordnet ist, um den Elektromotor (7) zu versorgen, und andererseits einen elektronischen Befehlsschaltkreis (12), der einem elektronischen Leistungsschaltkreis (11) zugeordnet ist, um die Pulverkupplung (10) zu versorgen.

4. Vorrichtung zur Wiedergabe der Lenkkraft gemäß Ansprüchen 1 bis 3, **dadurch gekennzeichnet, dass** sie zusätzlich einen Sensor (14) umfasst, der eine Regelung des den Elektromotor (7) steuernden Stromes ($i_1$) erlaubt.

5. Vorrichtung zur Wiedergabe der Lenkkraft gemäß Ansprüchen 1 bis 4, **dadurch gekennzeichnet, dass** die vom elektronischen Befehls- und Steuerrechner (4) gesteuerten Ströme ($i_{1m}$ und $i_{2m}$), die jeweils im Elektromotor (7) und in der Pulverkupplung (10) verlaufen, an die Umwandlungsmittel (13) zurückgesandt werden, um sodann vom elektronischen Befehls- und Steuerrechner (4) gesteuert zu werden.

**Claims**

1. Steering-wheel effort reproduction device for a motor vehicle with an uncoupled steering system, comprising an electronic control and monitoring unit (4), a steering wheel angle sensor (5), an electric motor (7) and a magnetic powder clutch (10), also comprising:

- electronic means (13) for conversion of the voltage settings ($u_1$ and $u_2$) delivered by the control unit (4), to current settings ($i_1$ and $i_2$),

and **characterized in that**

- the steering wheel angle sensor (5) is coupled to the steering column (6) of the vehicle and connected to the unit (4),
- the output shaft of the central rotor of the electric motor (7) is directly securely attached to the steering column (6), the motor being controlled by a current setting ($i_1$) sent by the conversion means (13) and applying to the steering column a restoring torque ($C_r$) that is proportional to the transverse acceleration ($r_t$) of the vehicle,
- the internal cylinder of the magnetic powder clutch (10), which is made up of two concentric cylinders between which a magnetic powder is contained, is directly securely attached to the steering column (6), the clutch being controlled by a current setting ($i_2$) sent by the conversion means (13) and applying to the steering column a frictional torque ($C_f$).

2. Effort reproduction device according to claim 1, **characterized in that** the magnetic powder clutch (10) applies to the steering column (6) a frictional torque ($C_f$) that is expressed in the form of a product on the one hand, of a component [$K_p(V)$] that is a function of the speed (V) of the vehicle, and on the other hand, a component [$K_d(\alpha'$] that is a function of the speed ($\alpha'$) of the steering wheel (1):

$$C_f = K_p(V)*K_d(\alpha').$$

3. Effort reproduction device according to claim 1, **characterized in that** the conversion means (13) comprise on the one hand, an electronic control circuit (9) linked to an electronic power circuit (8) for supplying the electric motor (7) and on the other hand, an electronic control circuit (12) linked to an electronic power circuit (11) for supplying the magnetic powder clutch (10).

4. Effort reproduction device according to claims 1 to 3, **characterized in that** it also comprises a sensor (14) allowing for the control of the current ($i_1$) controlling the electric motor (7).

5. Effort reproduction device according to claims 1 to 4, **characterized in that** the currents ($i_{1m}$ and $i_{2m}$) flowing respectively in the electric motor (7) and the magnetic powder clutch (10), controlled by the electronic control and monitoring unit (4), are sent back to the conversion means (13) in order to then be monitored by said electronic control and monitoring

unit (4).

# FIG_1

## FIG_2b

## FIG_2a

## FIG_3

## FIG_4